# EUROPÄISCHE PATENTSCHRIFT

(11) **EP 3 023 222 B1**
(45) Veröffentlichungstag und Bekanntmachung des Hinweises auf die Patenterteilung: **20.02.2019**
(21) Anmeldenummer: 15199725.1
(22) Anmeldetag: 16.07.2009
(51) Int. Cl.: B29C 47/40, B29C 47/42, B29C 47/60, B29C 47/62, B30B 11/24

(54) **EXTRUDER**
EXTRUDER
EXTRUDEUSE

(43) Veröffentlichungstag der Anmeldung: 25.05.2016
(62) Teilanmeldung aus: 09777225.5
(73) Patentinhaber: Blach Verwaltungs GmbH & Co. KG, 74348 Lauffen a.N. (DE)
(72) Erfinder: Blach, Josef A., 6632 Ehrwald (AT)
(74) Vertreter: LS-MP von Puttkamer Berngruber Loth Spuhler

(56) Entgegenhaltungen:
- EP-A1- 0 788 867
- EP-A2- 0 875 356
- EP-B1- 0 002 131
- DE-A1- 10 103 094
- DE-A1- 10 207 145
- DE-A1- 10 233 213
- DE-A1-102004 052 055
- JP-A- 2008 132 672
- US-A1- 2006 003 042
- US-B1- 6 170 975
- US-B1- 6 783 270

## Beschreibung

Die Erfindung bezieht sich auf einen Zwei- oder Mehrwellen Extruder des Anspruchs 1.

Zwei- oder Mehrwellen-Extruder mit gleichsinnig antreibbaren Wellen weisen im Wesentlichen dichtkämmende Förderschnecken sowie Knetblöcke als Förderelemente auf. Geeignete Bauelemente in der benötigten Vielfalt werden zwecks einfacher Anpassung von Geometrie und Werkstoff an die verschiedenen Verfahrensaufgaben meist auf die Tragwellen drehfest aufsteckbar ausgeführt.

Um die nötige Flexibilität mit den hohen Ansprüchen an Wirtschaftlichkeit und Sicherheit in Einklang zu bringen, sind geometrische Einschränkungen, wie z.B. nur eine oder wenige Elementlängen und/oder gleiche Montageposition an den Enden, notwendig. Dies beschränkt die nötigen Schneckensteigungen, Elementtypen und/oder Baulängen wesentlich. Um die erforderliche Anpassungsfähigkeit bei den Elementen zu erreichen, müssen nur die Endpositionen und/oder Längen eingehalten werden, sodass die geometrischen Verhältnisse dazwischen, wie Steigung und Versatzwinkel, stufenlos oder in Stufen frei nach verfahrenstechnischen Gesichtspunkten wählbar werden. Effektivität und die Art des Energieübergangs von den Förderstrukturen in das Produkt beeinflussen beim Produktdurchlauf sowohl die Produkttemperatur als auch dessen Qualität. Um pulverförmige Feststoffe mit viskosen Stoffen zu benetzen und darin zu verteilen und/oder zu zerteilen, sind Scherströmungen und noch besser Dehnströmungen im hochviskosen Stoff zu generieren.

Aus EP 0 002 131 B1, EP 875 356 A2 und DE 101 03 094 A1 sind selbstreinigende Extruder mit zwei Wellen und zweigängigem Schneckenprofil beschrieben, bei welchem ein Kamm der Schnecke einen geringen und der zweite einen großen Abstand zur Gehäuseinnenwand hat.

US6170975 B1 offenbart einen Mehrwellen Extruder mit Knetblöcken. Dabei ist zwischen den miteinander kämmenden Knetblöcken ein Spalt vorgesehen, ebenso zwischen jeder Kurvenscheibe und der Innenwand des Extrudergehäuses.

Dadurch ergeben sich zwischen zwei benachbarten Kämmen mit geringem Abstand zur Gehäuseinnenwand zwei Gänge, die durch einen Kamm mit großem Abstand zur Gehäusewand getrennt werden. Damit kann das Produkt ungehindert von einem Gang in den anderen fließen, wodurch es solange in den einen, ersten Gang fließt, bis dieser gefüllt ist, während der zweite Gang allenfalls teilgefüllt wird. Dadurch wird das Produkt nur in dem ersten Gang der nötigen homogenen Behandlung unterworfen, sodass, da der Stoffaustausch von dem ersten in den zweiten Gang unbedeutend ist, es zu einer Ungleichbehandlung des Produkts kommt.

Die Homogenisierung und Dispergierung der Feststoffe in einer viskosen Matrix, die mit den bekannten Extrudern erzielbar ist, lässt jedoch noch zu wünschen übrig. Dies gilt insbesondere für Feststoffe mit einer Teilchengröße im µm-Bereich.

Aufgabe der Erfindung ist es, einen uneingeschränkt selbstreinigenden Mehrwellen-Extruder zur Verfügung zu stellen, mit dem die Produktqualität wesentlich und effektiv verbessert wird.

Dies wird erfindungsgemäß mit dem Extruder nach dem Anspruch 1 erreicht. In den Unteransprüchen sind vorteilhafte Ausgestaltungen der Erfindung wiedergegeben.

Dazu werden wenigstens zweigängige als Knetblöcke ausgebildete Förderelemente verwendet, die im Profilquerschnitt, also im senkrechten Querschnitt zur Welle aus Kreisbögen bestehen, wobei miteinander kämmende Förderelemente sich im Wesentlichen am ganzen Umfang gegenseitig dicht abstreifen. Neben zweigängigen werden insbesondere auch dreigängige Förderelemente verwendet.

Der erfindungsgemäße Extruder ist damit auch zur Bearbeitung empfindlicher Produkte geeignet, beispielsweise zur Aufarbeitung von Polyethylenterephthalat (PET).

Die Förderelemente sind vorzugsweise einstückig ausgebildet, z.B. durch Fräsen eines entsprechenden Metallstücks. Während der Kamm des ersten Ganges die Innenwand des Gehäuses im Wesentlichen dicht abstreift, also z.B. bei einem Außendurchmesser Da des Förderelements von weniger als 100 mm nur ein geringes Spiel von beispielsweise weniger als 1, vorzugsweise weniger als 0,5 mm aufweist, entspricht der Abstand des Kamms des wenigstens einen weiteren Ganges des Schneckenelements von der Gehäuseinnenwand vorzugsweise höchstens der halben Gangtiefe des ersten Gangs, vorzugsweise jedoch mehr als 1 mm.

Die axiale Länge des Förderelements beträgt vorzugsweise mindestens 1Da und sollte 4Da nicht übersteigen, da es bei einer Länge über 4Da schwierig zu handhaben, beispielsweise schwer von der Welle zu lösen ist.

Der erfindungsgemäße Extruder weist mindestens zwei vorzugsweise mindestens drei gleichsinnig antreibbare achsparallele Wellen auf. Die Wellen können dabei in einer geraden, ebenen Fläche angeordnet sein. Statt dessen können auch längs eines Kreises oder Kreisbogens angeordnete Wellen in dem Hohlraum des Extrudergehäuses vorgesehen sein, wobei das Extrudergehäuse an der radial innen- und außenliegenden Seite des Hohlraumes jeweils mit zur Extruderachse parallelen konkaven Kreissegmenten versehen ist, in denen die Schneckenelemente im Wesentlichen dicht geführt sind, wie beispielsweise in EP-B-0788867 beschrieben.

Dabei sind vorzugsweise mindestens sechs mit gleichem Zentriwinkelabstand angeordnete Wellen im Kreis angeordnet.

Mit den Förderelementen kann damit ein Stoffdurchtritt durch den Wellenkranz von einer Seite des Hohlraums zur anderen erfolgen. Bei beispielsweise sechs im Kreis mit gleichem Zentriwinkelabstand angeordneten Wellen wird mit zwölf Umlenkungen des Produkts die Homogenisierung damit wesentlich gesteigert.

Die Gangtiefe des ersten Kammes der Förderelemente kann kleiner sein als die Gangtiefe der übrigen Standard-Förderelemente des Extruders, also der Förderelemente, die mit ihren Kämmen die Innenwand des Gehäuses im Wesentlichen dicht berühren.

Zwischen zwei Kurvenscheiben des Knetblocks kann ein konzentrischer ringförmiger Abschnitt vorgesehen sein, der am Umfang eine geringe axiale Länge von beispielsweise maximal 1/5 der axialen Länge einer Kurvenscheibe besitzt und eine freie Durchtrittshöhe zur Gehäuseinnenwand aufweist, die gleich oder größer als die halbe Gangtiefe ist.

Der ringförmige Abschnitt kann kreisförmig sein, aber auch von der Kreisform abweichen. Durch den ringförmigen Abschnitt zwischen zwei Kurvenscheiben wird die Fördergeschwindigkeit in axialer Richtung herabgesetzt und damit die Dispergierwirkung erhöht.

Die Schneckenabschnitte sind dabei vorzugsweise derart im Winkel versetzt angeordnet, dass der Kamm jedes Ganges des Förderelements aus aneinander anschließenden und sich abwechselnden Kammabschnitten, die die Innenwand des Gehäuses im Wesentlichen dicht abstreifen, und Kammabschnitten, die einen Abstand zur Innenwand des Gehäuses aufweisen, gebildet wird.

Knetblöcke werden zum Mischen und Kneten des Produkts eingesetzt. Durch die im Winkel versetzten Kurvenscheiben besitzen sie jedoch zugleich eine fördernde Wirkung.

Die Kurvenscheiben weisen dabei einen zu den Wellen senkrechten Querschnitt auf, der dem Querschnitt durch einen Schneckenabschnitt entspricht.

D.h., wie der Schneckenabschnitt weist auch jede Kurvenscheibe einen Kamm auf, der die Innenwand des Gehäuses im Wesentlichen dicht abstreift und wenigstens einen weiteren Kamm im Abstand von der Gehäuseinnenwand.

Dabei bilden die sich an der Gehäuseinnenwand dicht abstreifenden Kämme der Kurvenscheiben der Förderelemente den ersten Gang und die im Abstand von der Gehäuseinnenwand angeordneten Kämme der Kurvenscheibe des Förderelements den wenigstens einen weiteren Gang. Dabei sind die Förderelemente ebenfalls vorzugsweise einstückig ausgebildet, beispielsweise durch Fräsen eines Metallstücks.

Dabei können zwischen zwei Kurvenscheiben ringförmige Abschnitte vorgesehen sein, um den Stofffluss in axialer Richtung zu verlangsamen und damit die Dispergierwirkung zu erhöhen.

Dabei streifen sich die miteinander kämmenden Förderelemente gegenseitig mit geringem Spiel am ganzen Umfang ab. Zugleich streift der Kamm des ersten Ganges die Innenwand des Gehäuses dicht ab. Darüber hinaus streift der Kamm des ersten Ganges den Kern und die Flanken des korrespondierenden Förderelements ab. D.h., dieser Kamm der jeweiligen Kurvenscheibe streift den Kern und die Flanken der korrespondierenden Kurvenscheibe dicht ab, mit der er kämmt. Dies gilt für Schneckenelemente als Förderelemente ebenso wie für Knetblöcke als Förderelemente. Wenn die Knetblöcke die besagten konzentrischen ringförmigen Abschnitte aufweisen, übernehmen jedoch diese das Abstreifen der Flanken.

Nachstehend ist die Erfindung anhand der beigefügten Zeichnung beispielhaft näher erläutert. Darin zeigen:
Figur 1a jeweils einen Querschnitt durch einen ersten Förderabschnitt und Figur Ib einen gegenüber Figur 1a um 180° gedrehten, zweiten Förderabschnitt eines Förderelements;
Figur 2 bis 4 eine perspektivische Ansicht bzw. Vorderansicht bzw. Seitenansicht von zwei miteinander kämmenden Knetblöcken; und
Figur 5 bis 7 eine perspektivische Ansicht bzw. Vorderansicht bzw. Seitenansicht von einer Variante der Knetblöcke nach Figur 2 bis 4.

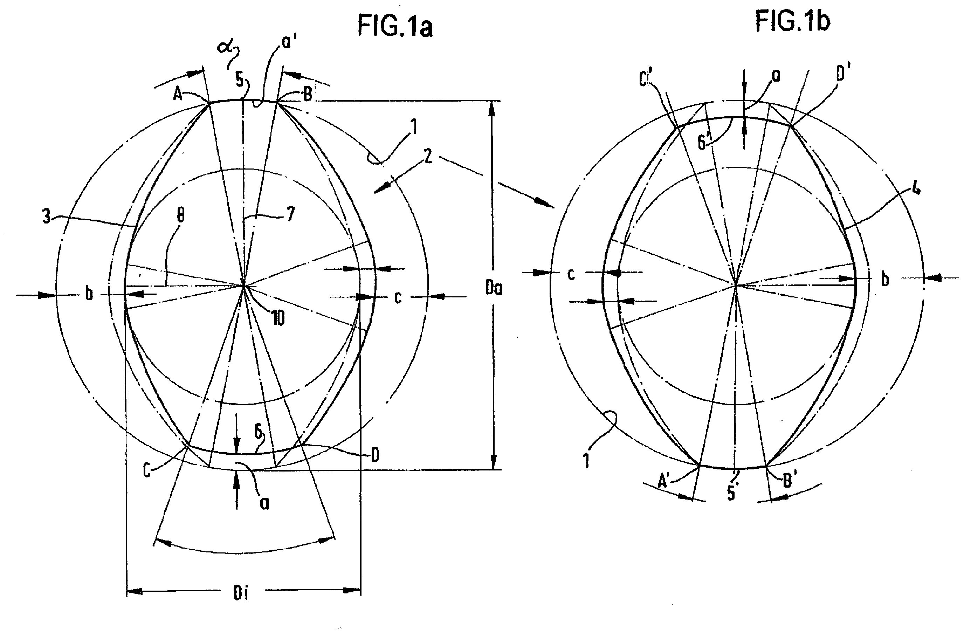

Gemäß Figur 1a und 1b weist das Gehäuse des Extruders eine zylindrische Innenwand 1 auf.

Dabei wird ein 2-gängiges Förderelement 2 verwendet, das gemäß Figur 1a und 1b aus zwei Förderabschnitten 3 und 4 besteht, und zwar den ersten Förderabschnitten 3 und den zweiten, gegenüber den ersten Förderabschnitten 3 um 180° gedrehten weiteren Förderabschnitt 4.

Der Profilquerschnitt, also der senkrechte Querschnitt zur Welle der Förderabschnitte 3, 4 besteht aus Kreisbögen. Dabei gibt der Kreisbogen A-B in Figur 1a bzw. der Kreisbogen A'-B' in Figur 1b den Kamm 5, 5' des ersten Ganges wieder, der die Innenwand 1 des Gehäuses im Wesentlichen dicht, also mit nur geringem Spiel a' berührt, während der Kreisbogen C-D bzw. C'-D' den Kamm 6, 6' des zweiten Ganges darstellt, der mit einem Abstand a zur Innenwand 1 angeordnet ist. Damit weist gemäß Figur 1a der eine Gang mit dem Kamm 5 eine große Gangtiefe b und der zweite Gang mit dem Kamm 6 eine geringe Gangtiefe c auf. Die langen Kreisbögen A-C und B-D bzw. A'-C' und B'-D' setzen sich jeweils aus drei Kreisbögen zusammen, und zwar in der Mitte aus einem Kreisbogen mit einem Durchmesser, der den Kerndurchmesser Di entspricht, an den sich beiderseits jeweils ein Kreisbogen mit einem Durchmesser anschließt, dessen Radius dem Achsabstand Ax der beiden Förderelemente entspricht.

Der zweite Förderabschnitt 4 gemäß Figur 1b, der axial dem ersten Förderabschnitt 3 folgt, kann durch Spiegeln des ersten Förderabschnitts 3 an der Achse 7 oder der dazu um 90° gedrehten Achse 8 gebildet, oder durch Drehen um 180° erreicht werden.

Die Achse 7 wird dabei durch die Ebene gebildet, die die Wellenachse 10 und die Mitte des Kammes 5 schneidet, die Achse 8 durch die Ebene, die die Kreisbögen AC und BD in der Mitte und die Wellenachse 10 schneidet.

Der Außendurchmesser Da des Förderelements 2 kann z.B. 10 bis 50 mm betragen, der Innendurchmesser Di z.B. 7 bis 30 mm, der Abstand a z.B. 1 bis 3 mm. Der Kamm 5 kann einen Winkel α von z.B. 15 bis 25 ° einschließen.

D.h. der zweite Kamm 6' des zweiten Förderabschnitts 4, der durch den Kreisbogen C'-D' gebildet wird und den Abstand a zur Gehäuseinnenwand 1 aufweist, ist gegenüber dem zweiten Kamm 6 des ersten Förderabschnitts 3 um 180 ° versetzt angeordnet, desgleichen die große Gangtiefe b und die geringe Gangtiefe c.

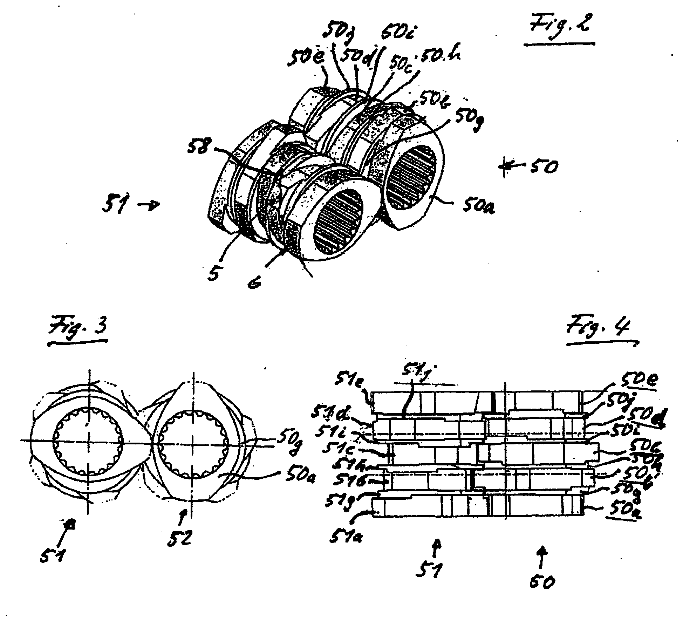

Nach Figur 2 bis 4 und 5 bis 7 sind als Förderelemente miteinander kämmende Knetblöcke 50, 51 bzw. 52, 53 vorgesehen, um einen hohen spezifischen Energieeintrag zu erreichen.

Dabei bestehen die Knetblöcke 50, 51 nach Figur 2 bis 4 aus im Winkel versetzten Kurvenscheiben 50a bis 50e und 51a bis 51e.

Die Kurvenscheiben 50a bis 50e, 51a bis 51e, weisen dabei einen zu den Wellen senkrechten Querschnitt auf, der dem Querschnitt durch das Förderelement 2 nach Figur 1a und 1b entspricht.

D.h. entsprechend Figur 1a und 1b weist jede Kurvenscheibe 50a bis 50e und 51a bis 51e einen schmalen Kamm 5, 5' auf, der die Innenwand 1 des Gehäuses dicht abstreift und einen weiteren breiten Kamm 6, 6' im Abstand von der Gehäuseinnenwand.

Dabei werden ebenfalls Gänge gebildet, die eine Förderwirkung hervorrufen, wie durch den gestrichelt dargestellten Gang 58 in Figur 2 veranschaulicht. Die Gänge jedes Knetblocks 50, 51 werden dabei durch sich abwechselnd breite Kämme 6,6' und schmale Kämme 5,5' gebildet, wie der Gang 58 nach Figur 2 zeigt.

Bei den Knetblöcken nach Figur 2 bis 4 sind zwischen den Förderabschnitten oder Kurvenscheiben 50a bis 50e und 51a bis 51e zu den Wellen konzentrische ringförmige Abschnitte 50g bis 50j bzw. 51g bis 51j vorgesehen.

Da der Spalt zwischen dem breiten Kamm 6 und der Gehäuseinnenwand 1 einen großen Stoffaustausch ermöglicht, während zwischen dem Kamm 5 der Kurvenscheiben 51a und der Kurvenscheibe 50a nur ein geringer Spalt besteht, also das Produkt hoch beansprucht, dafür aber intensiv dispergiert wird. Da diese Beanspruchung nur in diesem kleinen Bereich erfolgt, wird insgesamt eine schonende Behandlung des Produkts erreicht.

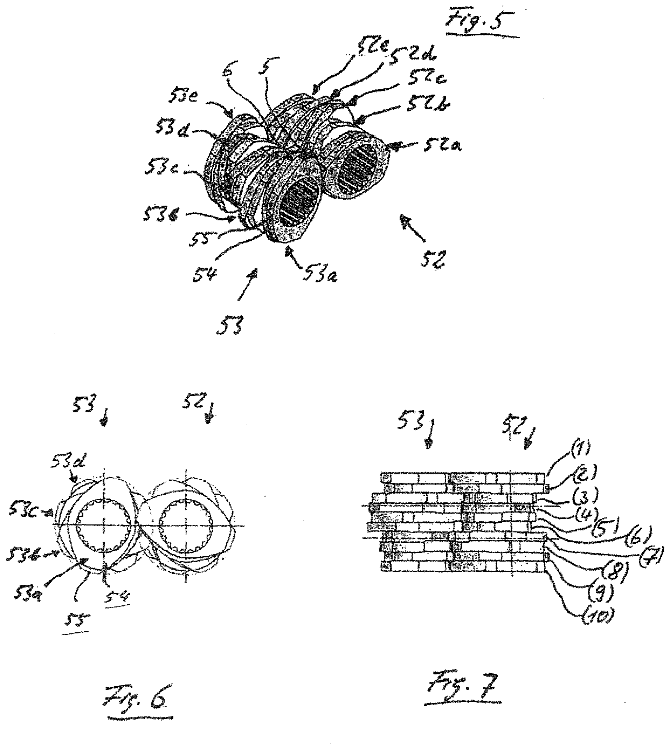

Gemäß Figur 5 bis 7 besteht jede Kurvenscheibe 52a bis 52e und 53a bis 53e der miteinander kämmenden Knetblöcke 52, 53 aus zwei Teilscheiben, wie durch die Teilscheiben 54, 55 der Kurvenscheibe 53a veranschaulicht.

Die Knetblöcke 52, 53 nach Figur 5 bis 7 bestehen jeweils aus fünf Doppelscheiben 52abis 52e bzw. 53a bis 53e. Dadurch ergeben sich insgesamt zehn Teilscheiben, die für den Knetblock 52 in Figur 7 mit (1) bis (10) bezeichnet sind. Dabei sind die ungeraden Teilscheiben (1), (3), (5), (7), (9) zu den geraden (2), (4), (6), (8), (10) um 180° verdreht zugeordnet und die geraden zu den ungeraden um 225° (180° plus 45°).

Dabei streift sich, wie anhand der Teilscheiben 54, 55 gezeigt, der Kamm der einen Teilscheibe 54 an der Gehäuseinnenwand im Wesentlichen dicht ab, während der benachbarte Kamm der benachbarten Teilscheibe 55 der Kurvenscheibe 53a einen Abstand zur Gehäuseinnenwand 1 entsprechend dem Abstand a nach Figur 1a und Figur 1b aufweist.

## Patentansprüche

1. Extruder mit einem Gehäuse mit wenigstens zwei gleichsinnig antreibbaren achsparallelen Wellen, die mit wenigstens zweigängigen Förderelementen (2, 50, 51, 52, 53) versehen sind, wobei in einem zu den Wellen senkrechten Querschnitt miteinander kämmende Förderelemente (2, 50, 51, 52, 53) sich gegenseitig in einem Achsabstand (Ax) mit geringem Spiel am ganzen Umfang abstreifen und zwischen einem Kamm (6, 6') wenigstens eines weiteren Ganges und der Innenwand (1) des Gehäuses ein Abstand (a) besteht, das Förderelement (2, 50, 51, 52, 53) wenigstens zwei im Winkel verdrehte Förderabschnitte (3, 4; 50a bis 50e; 51a bis 51e; 52a bis 52e; 53a bis 53e) aufweist, wobei jeder Förderabschnitt (3,4) eine axiale Länge (Ls) aufweist, die kleiner als der Außendurchmesser (Da) des Förderelements (2, 50, 51, 52, 53) ist, ein Verdrehwinkel von einem Förderabschnitt (3, 4) zum nächsten stufenlos oder in Stufen 360°/Gangzahl ist, und die miteinander kämmenden Förderelemente (2, 50, 51, 52, 53) durch Knetblöcke gebildet sind, die Förderabschnitte (3, 4) durch die im Winkel versetzten Kurvenscheiben (50a bis 50e, 51a bis 51e) der Knetblöcke (50, 51) gebildet sind, wobei jede Kurvenscheibe (50a bis 50e, 51a bis 51e) zur Bildung von Gängen (58), die eine Förderwirkung hervorrufen, einen schmalen Kamm (5, 5'), der die Innenwand (1) des Gehäuses dicht abstreift und einen weiteren breiten Kamm (6, 6') im Abstand (a) von der Gehäuseinnenwand (1) aufweist, wobei die Gänge (58) jedes Knetblocks (50, 51) durch sich abwechselnd breite Kämme (6, 6') und schmale Kämme (5, 5') gebildet werden.

## Claims

1. Extruder having a housing with at least two axially parallel shafts which are capable of being driven in the same direction and provided with at least two-flight conveying elements (2, 50, 51, 52, 53), wherein conveying elements (2, 50, 51, 52, 53) intermeshing in a cross-section perpendicular to the shafts strip each other at an axial distance (Ax) with a small clearance over the entire circumference, and wherein there is a distance (a) between a comb (6, 6') of at least one further flight and the inner wall (1) of the housing, wherein the conveying element (2, 50, 51, 52, 53) has at least two conveying sections (3, 4; 50a to 50e; 51a to 51e; 52a to 52e; 53a to 53e) rotated through an angle, wherein each conveying section (3, 4) has an axial length (Ls) which is smaller than the outer diameter (Da) of the conveying element (2, 50, 51, 52, 53), wherein a torsion angle from one conveying section (3, 4) to the next one is continuous or in steps 360°/number of flights, and the intermeshing conveying elements (2, 50, 51, 52, 53) are formed by kneading blocks, the conveying sections (3, 4) are formed by the cam disks (50a to 50e, 51a to 51e) of the kneading blocks (50, 51) offset at an angle, wherein each cam disk (50a to 50e, 51a to 51e) for forming flights (58) having a conveying effect has a narrow comb (5, 5') closely stripping the inner wall (1) of the housing and a further wide comb (6, 6') at a distance (a) from the inner wall (1) of the housing, wherein the flights (58) of each kneading block (50, 51) are formed by alternating wide combs (6, 6') and narrow combs (5, 5').

## Revendications

1. Extrudeuse comportant un boîtier présentant au moins deux arbres de transport avec axes en parallèle et susceptible d'être entraînés dans le même sens, qui sont pourvus d'éléments de transport (2, 50, 51, 52, 53) à au moins double filet, des éléments de transport (2, 50, 51, 52, 53) qui s'engrènent les uns avec les autres dans une section transversale perpendiculaire aux arbres, se raclant réciproquement sur toute la périphérie dans un espacement d'axe (Ax) avec faible jeu, et un espacement (a) se trouvant entre une crête (6, 6') d'au moins un autre filet et la paroi intérieure (1) du boîtier, l'élément de transport (2, 50, 51, 52, 53) présentant au moins deux tronçons de transport à torsion angulaire (3, 4 ; 50a à 50e, 51a à 51e ; 52a à 52e , 53a à 53e), chaque tronçon de transport (3, 4) présentant une longueur axiale (Ls) qui est inférieure au diamètre extérieur (Da) de l'élément de transport (2, 50, 51, 52, 53), un angle de torsion d'un tronçon de transport (3, 4) au suivant étant de 360° par nombre de filets, en continu ou par degrés, et les éléments de transport (2, 50, 51, 52, 53) s'engrenant les uns avec les autres étant formés par des blocs de pétrissage, les tronçons de transport (3, 4) étant formés par les disques de cames (50a à 50e, 51a à 51e) à décalage angulaire des blocs de pétrissage (50, 51), chaque disque de came (50a à 50e, 51a à 51e) présentant, pour former des filets (58) qui suscitent un effet de transport, une crête étroite (5, 5') qui racle de manière serrée la paroi intérieure (1) du boîtier et une autre crête large (6, 6') dans un espacement (a) de la paroi intérieure (1) du boîtier, les filets (58) de chaque bloc de pétrissage (50, 51) étant formés par des crêtes larges (6, 6') et des crêtes étroites (5, 5') en alternance.
